Europäisches Patentamt

European Patent Office

Office européen des brevets

(11) Veröffentlichungsnummer: **0 108 327**

**B1**

(12) # EUROPÄISCHE PATENTSCHRIFT

(45) Veröffentlichungstag der Patentschrift:
27.04.88

(51) Int. Cl.⁴: **B 62 K  19/00,** B 62 J  1/02,
B 62 K  21/14

(21) Anmeldenummer: 83110622.4

(22) Anmeldetag: 25.10.83

(54) Zweiradfahrzeug, insbesondere Fahrrad.

(30) Priorität: 02.11.82  DE 3240398
02.04.83  DE 3312040

(43) Veröffentlichungstag der Anmeldung:
16.05.84 Patentblatt 84/20

(45) Bekanntmachung des Hinweises auf die Patenterteilung:
27.04.88 Patentblatt 88/17

(84) Benannte Vertragsstaaten:
AT BE DE FR GB IT NL

(56) Entgegenhaltungen:
BE-A-488 779
BE-A-670 576
DE-A-2 655 595
DE-B-1 011 305
DE-C-164 930
DE-C-866 312
FR-A-359 453
FR-A-369 857
FR-A-474 361
FR-A-617 118
FR-A-1 052 078
GB-A-118 441
GB-A-177 300
GB-A-391 471
US-A-3 377 084

(73) Patentinhaber: **Papp, Karel, Schlesierstrasse 20a,
D-8901 Königsbrunn (DE)**

(72) Erfinder: **Papp, Karel, Schlesierstrasse 20a, D-8901
Königsbrunn (DE)**

(74) Vertreter: **Böhmer, Hans Erich, Dipl.- Ing.,
Keplerstrasse 23, D-7031 Aidlingen- Dachtel (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Fahrrad mit im allgemeinen üblicher Bauart, d.h. im wesentlichen bestehend aus einem Rahmen mit drehbar gelagerter Vorderradgabel und Vorderrad sowie Lenker, mit feststehender Hinterradgabel mit Hinterrad, Sattel mit Sattelstütze und mit einem Antriebsaggregat, beispielsweise bestehend aus im Tretlager gelagerten Tretkurbeln und einem über Kettenzahnräder und Kette erfolgenden Antrieb auf das Hinterrad. Insbesondere betrifft die Erfindung ein Fahrrad mit einer den Sattel federnd abstützenden Federvorrichtung, mit einer Seitenführung und mit einer am Rahmen mittels eines ersten Gelenkes gelagerten, den Sattel mit Sattelstütze tragenden, oberhalb eines Oberrohres angeordneten abgefederten Schwinge sowie mit einer zwischen dem Sattel und dem Rahmen angebrachten Feder, wobei die Federvorrichtung über ein zweites Gelenk mit der den Sattel tragenden Sattelstütze gelenkig verbunden ist.

Bei bisher bekannten Fahrrädern hing der Fahrkomfort meist von der mehr oder weniger unvollkommen wirksamen Federung des Sattels ab. Die heute meist verwendeten schmalen Hochdruckreifen übertragen die Unebenheiten der Straßen und Wege fast ungefedert auf den Rahmen und damit auf den Radfahrer. Die früher einmal gebräuchlichen Ballonbereifungen waren in dieser Hinsicht nicht viel besser. Es sind auch schon Versuche unternommen worden, insbesondere das Hinterrad an zwei Schwinghebeln, die an der Hinterradgabel federnd angelenkt sind, anzubringen. Damit lassen sich jedoch nur sehr kleine Federwege erzielen. Außerdem treten bei dieser Federung des Hinterrades Tretverluste auf.

Aus der am 20. April 1922 ausgegebenen GB-A-177 300 ist im Prinzip ein Fahrrad der eingangs genannten Art bekannt.

Für ein solches Fahrrad, um wirklich brauchbar zu sein, müßten eigentlich drei wesentliche Bedingungen erfüllt werden:

1. Der Federweg sollte möglichst groß sein, mindestens aber 30 bis 50 mm, besser aber bis zu 80 mm. Die Federung sollte auch bei einer Belastung mit 80 bis 100 kg voll funktionsfähig bleiben.

2. Wegen der ständigen Gewichtsverlagerung muß eine hohe Seitenstabilität der gesamten Konstruktion sichergestellt sein.

3. Die Konstruktion darf daher nur wenige Gelenkverbindungen aufweisen, die dabei aber überwiegend am Rahmen selbst angebracht sein sollten, damit sie die Stabilität nicht nachteilig beeinflussen können.

Die aus der GB-A-177 300 bekannte Konstruktion vermag diese Bedingungen nicht zu erfüllen und zwar aus folgenden Gründen:

Diese für ein Motorfahrrad oder Motorrad bestimmte Konstruktion weist eine mittels eines ersten Gelenks an einem Oberrohr angelenkte kurze Schwinge auf, die an einer geschlitzten, mit Langlöchern versehenen Sattelstütze mittels eines Gelenkbolzens verschiebbar gelagert ist und sein muß. Da diese Schwinge seitlich nicht geführt ist, ergäben sich bei einem Fahrrad durch die ständige Gewichtsverlagerung enorme in seitlicher Richtung wirkende Kräfte, die wegen der fehlenden Seitenstabilität an den Gelenken mit Sicherheit zu Brüchen führen können. Da außerdem die beiden parallel zum Sattelstützrohr angeordneten Federn weder seitlich geführt noch ausreichend stabil gelagert sind, ist die gesamte Konstruktion nicht nur zu schwer, sondern auch für ein Fahrrad wegen fehlender Seitenstabilität unbrauchbar.

Die der Erfindung zugrundeliegende Aufgabenstellung besteht also darin, ein Fahrrad der eingangs genannten Art zu schaffen, das die oben genannten Bedingungen zu erfüllen vermag und trotzdem ausreichend leicht gebaut ist.

Dies wird erfindungsgemäß dadurch erreicht, daß die Schwinge am vorderen ansteigenden Teil des Rahmens angelenkt ist, daß die Feder über ein drittes Gelenk mit dem Tretlagergehäuse bzw. der unteren Hinterradgabel verbunden ist, und daß die Federvorrichtung durch die Seitenführung, die mit dem Oberrohr starr verbunden ist, gleitend abgestützt ist.

Eine besonders vorteilhafte Ausgestaltung der Erfindung besteht darin, daß das Oberrohr von vorne nach hinten abfallend geneigt ist, daß die Schwinge einen U-förmigen Querschnitt aufweist, dessen Seitenwangen von vorne nach hinten entsprechend der Neigung des Oberrohrs breiter werden und dieses verdecken, daß dabei die Seitenwangen vorne und hinten Laschen mit Lagerbuchsen zur Aufnahme von Gelenkachsen aufweisen, daß damit die Schwinge einerseits mit dem Gabelkopf und andererseits mit der Federvorrichtung gelenkig verbunden ist, und daß die Federvorrichtung etwa parallel zum hinteren, ansteigenden Teil des Rahmens zwischen dem Tretlagergehäuse und der Schwinge angeordnet ist.

Die Schwinge, die nunmehr 500 bis 600 mm lang sein kann, bildet damit einen Schenkel eines Gelenkdreiecks, wobei zwei der Gelenkverbindungen am Rahmen befestigt sind. Die einzige freie Gelenkverbindung befindet sich am oberen Ende der Federvorrichtung. Führt man diese oder die Schwinge seitlich, so erhält man eine ausgezeichnete Seitenstabilität, auch bei Federwegen von 30 bis 50 mm oder sogar 80 mm, die sich mit Schraubenfedern erzielen lassen. Das gleiche gilt auch für entsprechend aufgebaute Teleskopfedervorrichtungen.

· Weitere Ausgestaltungen der Erfindung sind den weiteren Ansprüchen zu entnehmen.

Die Erfindung wird nunmehr anhand von Ausführungsbeispielen in Verbindung mit den beigefügten Zichnungen näher beschrieben.

In den Zeichnungen zeigt:

Fig. 1 ein Herrenfahrrad mit Federung gemäß der Erfindung;

Fig. 2 ein Damenfahrrad, mit Federung gemäß der Erfindung;

Fig. 3 eine perspektivische Teilansicht der neuen Rahmenkonstruktion;

Fig. 4 eine schematische Darstellung der beiden Endlagen der Schwinge mit Sattel und

Fig. 5 schematisch eine weitere Ausführungsform der Erfindung.

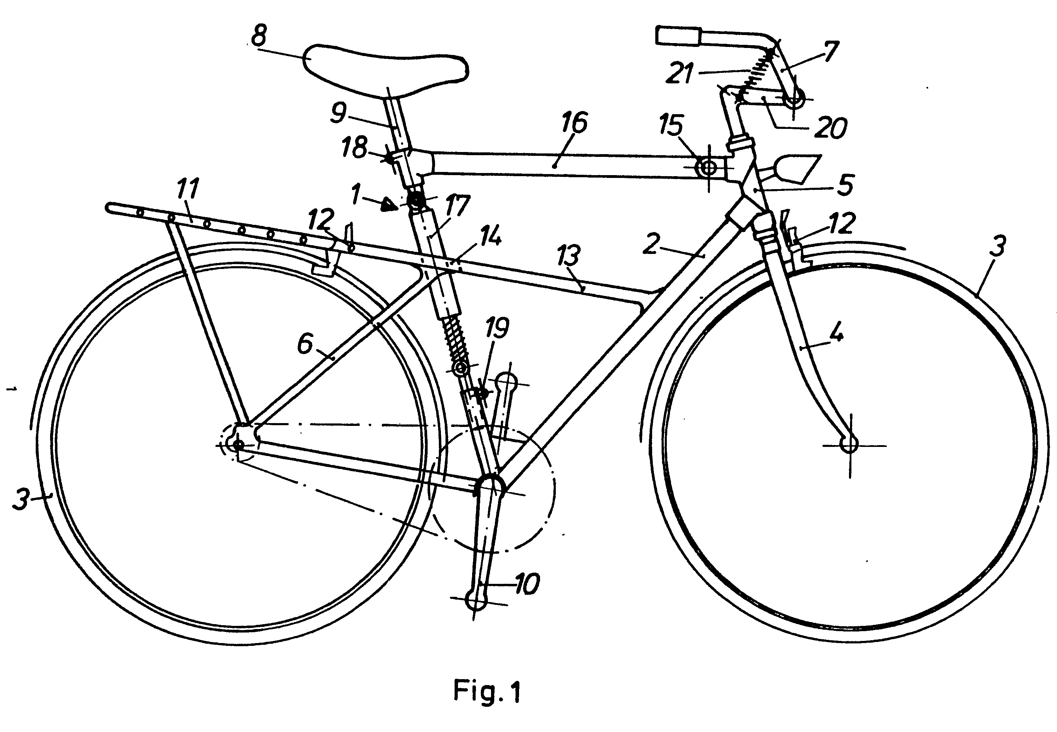

Fig. 1 zeigt ein in seinen wesentlichen Teilen in üblicher Weise aufgebautes Fahrrad der eingangs beschriebenen Art. Dieses Fahrrad 1 weist einen Rahmen 2, Räder 3, eine Vorderradgabel 4, die im Gabelkopf 5 drehbar gelagert ist, eine Hinterradgabel 6, einen Lenker 7, einen Sattel 8 mit Sattelstütze 9, im Tretlager gelagerte Tretkurbeln 10 für einen Kettenantrieb auf das Hinterrad, einen Gepäckträger 11 und Bremsen 12 auf. Eine Beleuchtungsanlage ist ebenfalls angedeutet.

Man erkennt jedoch, daß das normalerweise zwischen Gabelkopf und dem den Sattel mit Sattelstütze tragenden Teil des Rahmens liegende Oberrohr 13 tiefer gelegt ist und mit dem vorderen, nach oben ansteigenden Rahmenteil verschweißt ist. Das tiefergelegte Oberrohr 13 erweitert sich vorzugsweise in seinem rückwärtigen Teil zu einer Gabel 14, die sich dann in die Hinterradgabel 6 fortsetzt.

Am Gabelkopf 5 ist nunmehr ein Schwinggelenk 15 vorgesehen, in dem eine Schwinge 16 verschwenkbar gelagert ist, und die rein äußerlich den Platz des früheren Oberrohres einnimmt. Diese Schwinge ist an einer die Sattelstütze 9 aufnehmenden Muffe angeschweißt, an der wiederum mindestens eine Federvorrichtung 17, vorzugsweise ein Federbein oder eine Teleskopfeder gelenkig befestigt ist, deren anderes Ende an einem Rahmenteil befestigt ist, das an einer Muffe am Tretlager angeschweißt ist. Selbstverständlich können auch zwei nebeneinanderliegende Federvorrichtungen verwendet werden. In diesem Fall müßte das Oberrohr 13 zwischen den beiden Federbeinen oder Teleskopfedern hindurchreichen und sich erst dann zur Gabel 14 bzw. Hinterradgabel 6 erweitern.

An der die Sattelstütze 9 aufnehmenden Muffe ist eine Höhenverstellvorrichtung 18 für den Sattel 8 vorgesehen. In gleicher Weise ist an dem oberen Ende des vom Tretlager ausgehenden Rahmenteils eine Höhenverstellvorrichtung 19 für die Teleskopfeder oder das Federbein vorgesehen.

Außerdem erkennt man, daß ein geschwungener Lenker 7 an einem Lenkervorbau 20 angebracht ist und dort in einer waagerechten Achse um diese drehbar gelagert ist. Zwischen dem geschwungenen Lenker 7 und dem Lenkervorbau 20 sind dann zwei Druckfedern 21 vorgesehen, durch die der Lenker 7 so abgefedert ist, daß die vom Vorderrad übertragenen Fahrbahnanstöße sich nicht auf die Arme des Radfahrers übertragen können.

Im Betrieb werden durch die Federvorrichtung 17 die von der Fahrbahn herrührenden, in Richtung auf den Sattel übertragenen Fahrbahnstöße weich abgefedert. Es ist dabei darauf hinzuweisen, daß diese Federvorrichtung, d. h. das Federbein oder die Teleskopfeder vorzugsweise in ihrer Federkraft auf das jeweilige Gewicht des Radfahrers einstellbar ist.

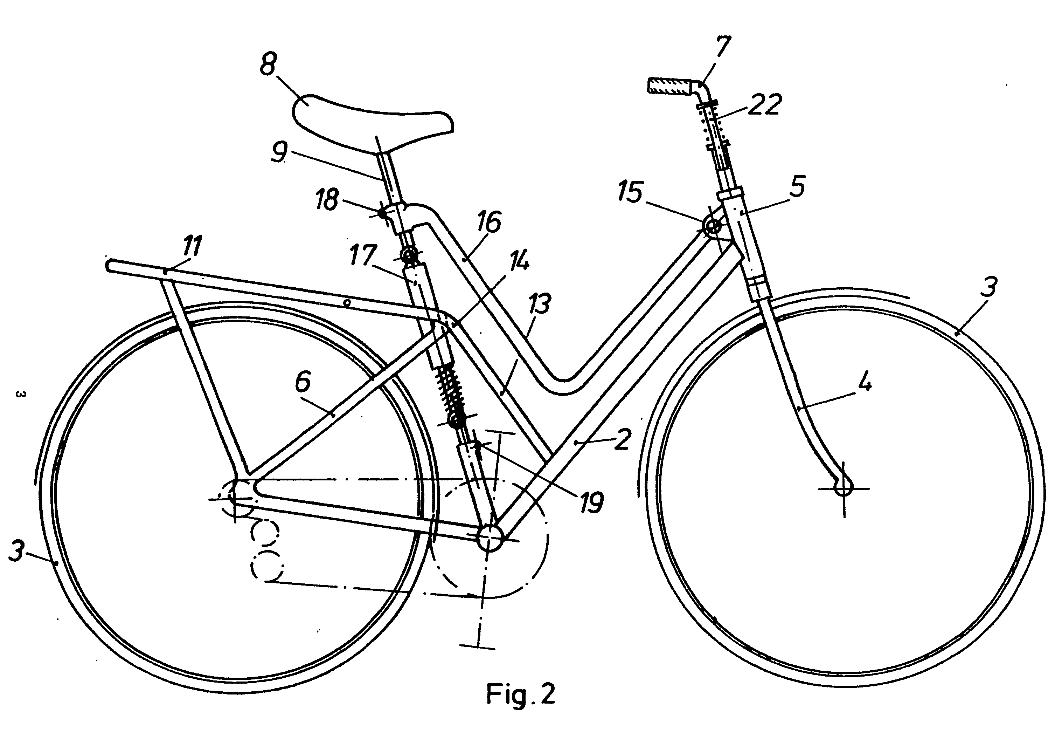

Fig. 2 zeigt ein nach dem gleichen Prinzip aufgebautes Damenfahrrad, wobei gleiche Teile wiederum mit den gleichen Bezugszeichen versehen sind. Man erkennt, daß das tiefergelegte Oberrohr nunmehr wesentlich tiefer angesetzt ist, und dort mit dem vorderen ansteigenden Rahmenteil verschweißt ist. Auch hier kann das tiefergelegte Oberrohr 13 je nachdem, ob eine oder zwei Federvorrichtungen 17 verwendet werden sollen, vor oder nach der jeweiligen Federanordnung sich zur Gabel 14 erweitern.

Da es sich hier um ein Damenfahrrad handelt, ist die Schwinge 16 ebenfalls in der für Damenfahrräder üblichen Weise nach unten abgewinkelt, erfüllt aber im übrigen die gleiche Funktion wie die Schwinge 16 in Fig. 1.

Man erkennt ferner einen geraden Lenker 7, der nunmehr durch eine zwischen Lenker und Gabelkopf 5 angeordnete Teleskopfeder 22 abgefedert ist. Vorzugsweise wird man dabei eine Oberrohr vorsehen und zwischen dieser Oberrohr und dem geraden Lenker 7 zwei Teleskopfedern 22 oder eine Doppel-Teleskopfeder vorsehen.

Durch diese neuartige Anordnung von Teleskopfedern und einer um ein Schwinggelenk 15 verschwenkbaren Schwinge 16 erhält man einen relativ langen Federweg und kann somit die Federung sehr genau auf die jeweiligen Bedürfnisse des Radfahrers einstellen.

Diese Ausführungsform der Erfindung läßt allerdings noch einige Wünsche bezüglich Stabilität und Genauigkeit der Führung der Federvorrichtung offen. Es scheint möglicherweise nachteilig zu sein, daß bei einigen Ausführungsbeispielen sich zwischen Schwinge und dem oberen, tiefer gelegten Oberrohr eine Art Scherenwirkung ergibt, da die Schwinge immer oberhalb des tiefer gelegten Oberrohres liegt.

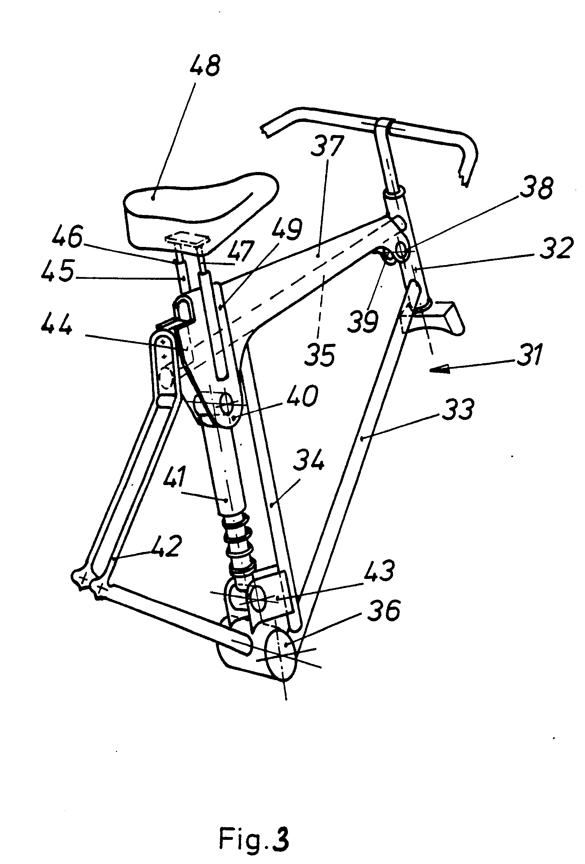

In Fig. 3 erkennt man einen Rahmen 31 mit einem Gabelkopf 32, an dem der Ansatz der Gabel und der Ansatz der Lenkstange angedeutet sind. Ferner erkennt man ein vorderes, ansteigendes Rahmenteil 33, ein rückwärtiges, ansteigendes Rahmenteil 34 und ein von vorne nach hinten abfallendes Oberrohr 35, das einerseits mit dem Gabelkopf 32 und andererseits mit dem rückwärtigen ansteigenden Rahmenteil verschweißt oder vermufft und hartgelötet ist. Außerdem ist mit dem vorderen Rahmenteil 33 ein Tretlagergehäuse 36 verbunden. Des weiteren ist auch die Hinterradgabel 42 einerseits mit dem Tretlager 36 und außerdem in noch anzugebender Weise mit dem Oberrohr 35 fest verbunden.

Eine Schwinge 37 mit U-förmigem Querschnitt ist an einem Schwinggelenk 38 über mit der Schwinge 37 aus einem Stück gefertigte Laschen 39 und einer nicht gezeigten Steckachse an einer ebenfalls hier nicht zu sehenden Buchse schwenkbar befestigt. Die Seitenwangen der Schwinge 37 werden von vorne nach hinten immer breiter und laufen am Ende in weit nach unten ausgreifende Montagelaschen 40 aus, die ebenfalls mit Buchsen versehen sind, die mittels einer Achse oder eines Zapfens der Befestigung einer Federvorrichtung 41 dienen, die beispielsweise ein handelsübliches hydraulisches Federbein sein könnte. Das untere Ende dieser Federvorrichtung 41 ist an zwei Lagerböcken befestigt, die ihrerseits mit dem Tretlagergehäuse 36 und vorzugsweise auch mit dem hinteren ansteigenden Rahmenteil 34 fest verbunden sind. Die nach oben führenden Streben der Hinterradgabel 42 sind an ihrem oberen Ende in etwa senkrechter Richtung abgewinkelt, fest mit dem Oberrohr 35 verbunden und tragen eine vorzugsweise lösbar befestigte Führungsschiene 44, die zwischen dem offenen Ende der an dieser Stelle ausgeschnittenen Schwinge 37 zu gleiten vermag. An der Schwinge selbst sind Sattelstützrohre 45 angebracht, die an ihren oberen Enden Klemmschrauben 46 tragen, mit deren Hilfe die in die Sattelstützrohre eingeführten Sattelstützen 47, die einen Sattel 48 tragen, in ihrer Höhenlage verstellbar festgelegt werden können.

Die Schwinge 37 kann im Prinzip aus jedem geeigneten, ausreichend verwindungssteifen Material gefertigt sein. Aus Gewichtsgründen könnte man Kunststoffe, insbesondere glasfaserverstärkte Kunststoffe an Stelle von Aluminium oder Stahl bevorzugen. Bei Verwendung von Kunststoffen sollte dann im Bereich der Sattelstützen ein ebenfalls U-förmiges, weit nach unten gezogenes Verstärkungsteil 49 vorgesehen sein.

Diese neuartige Konstruktion der Schwinge eröffnet eine ganze Reihe von Konstruktionsmöglichkeiten auch für Damenfahrräder oder Kinderfahrräder. So kann beispielsweise der Sattel auch ohne Sattelstütze unmittelbar auf der Schwinge selbst angebracht werden. Ferner können Oberrohr und Schwinge weit heruntergezogen sein.

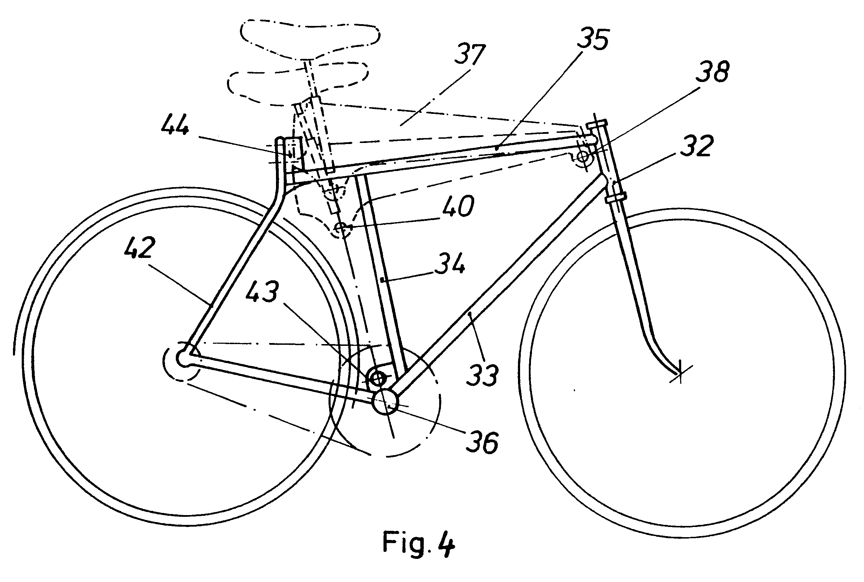

Wie man aus Fig. 4 erkennt, in der gleiche Teile wiederum mit den gleichen Bezugszeichen versehen sind, läßt sich der Sattel mit der Schwinge bei Belastung um eine ganz erhebliche Strecke nach unten verschieben. Entscheidend ist bei dieser Konstruktion, daß durch den langen Hebelarm der Schwinge und die gelenkig gelagerte Federvorrichtung ein so günstiger Radius für die Schwingbewegung erreicht wird, daß ein Verklemrnen der Federvorrichtung praktisch ausgeschlossen ist.

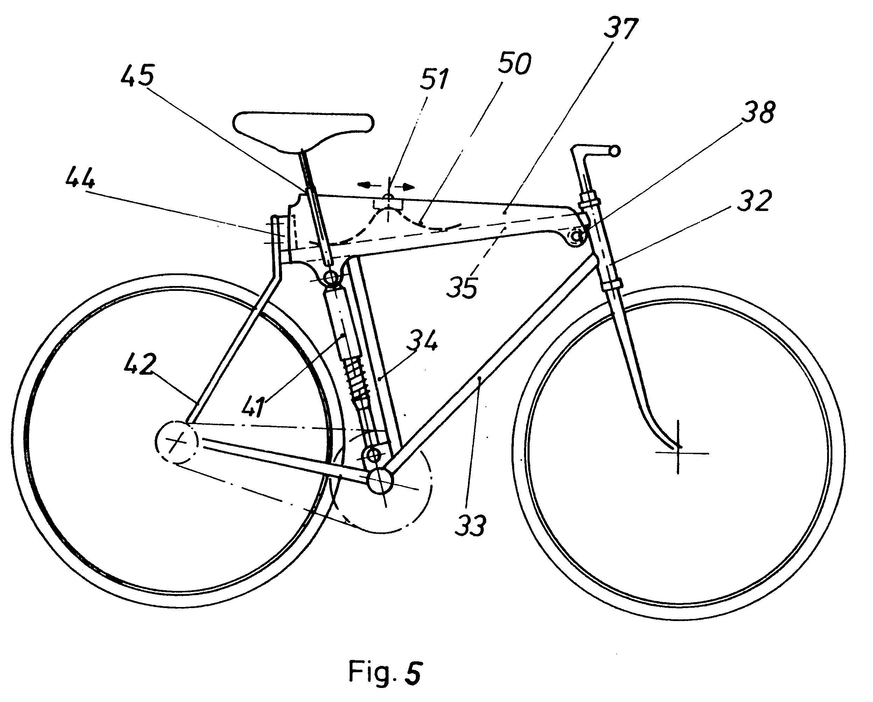

In Fig. 5 ist schematisch eine weitere Ausführungsform der Erfindung gezeigt, wobei wiederum gleiche Teile mit den gleichen Bezugszeichen versehen sind. Innerhalb der Schwinge ist rein schematisch eine Blattfeder 50 angedeutet, die entweder einseitig, oder, wie dargestellt, zweiseitig abgewinkelt sein kann und eine zusätzliche kräftige Vorspannung für die Schwinge liefert. Ebenfalls schematisch angedeutet ist eine Verstellvorrichtung 51, mit der die Federvorspannnung begrenzt verändert werden kann. Dies hat den großen Vorzug, daß man die Federkraft zwischen Blattfeder 50 und Federvorrichtung 41 aufteilen kann. Damit läßt sich bei der Federvorrichtung mit einem kleineren Modell eine Gewichtseinsparung erzielen.

Der sich bei dieser Schwinge ergebende Hub beträgt etwa zwischen 30 und 50 mm. Der Radius der Schwinge beträgt etwa 500 bis 600 mm. Insgesamt ist die Konstruktion wesentlich seitenstabiler und gewährleistet eine wesentlich bessere Führung der Schwinge im Betrieb. Außerdem ist der unerwünschte Schereneffekt beseitigt.

Zur Gewichtseinsparung könnte man außerdem noch die Schenkel oder Seitenwangen der Schwinge mit einer oder mehreren Öffnungen versehen.

Die Erfindung ist für die sich immer weiter ausbreitenden Fahrten auf schmalen Wanderwegen, Feldwegen u. dergl. von Bedeutung, die mit ihren Unebenheiten mit einem handelsüblichen Fahrrad auf die Dauer nicht befahren werden können, ohne beim Benutzer des Fahrrades zu Wirbelsäulenschäden zu führen. Die vorliegende Erfindung ist also ganz hervorragend geeignet, das Wandern mit Fahrrädern auch über Nebenwege, Waldwege und Feldwege weiter zu fördern und kann in seiner Bedeutung für die Gesundheit kaum überschätzt werden.

**Patentansprüche**

1. Fahrrad mit einer den Sattel (8; 48) federnd abstützenden Federvorrichtung, mit einer Seitenführung und mit einer am Rahmen mittels eines ersten Gelenks (15; 38, 39) gelagerten, den Sattel mit Sattelstütze tragenden, oberhalb eines Oberrohres angeordneten Schwinge (16; 37) sowie mit einer zwischen Sattel und Rahmen angebrachten Feder, wobei die Federvorrichtung (17; 41) über ein zweites Gelenk mit der den Sattel tragenden Sattelstütze gelenkig verbunden ist, dadurch gekennzeichnet, daß die Schwinge (16; 37) am vorderen ansteigenden Teil des Rahmens angelenkt ist, daß die Feder über ein drittes Gelenk mit dem Tretlagergehäuse bzw. der unteren Hinterradgabel verbunden ist, und daß die Federvorrichtung (17; 41) durch die Seitenführung (14; 44), die mit dem Oberrohr starr verbunden ist, gleitend abgestützt ist.

2. Fahrrad nach Anspruch 1, dadurch gekennzeichnet, daß das Oberrohr (35) von vorne nach hinten abfallend geneigt ist, daß die Schwinge (37) einen U-förmigen Querschnitt aufweist, dessen Seitenwangen von vorne nach hinten entsprechend der Neigung des Oberrohres (35) breiter werden und diese überdecken, daß dabei die Seitenwangen vorne und hinten Laschen (39, 40) mit Lagerbuchsen zur Aufnahme von Gelenkachsen aufweisen, daß damit die Schwinge (37) einerseits mit dem Gabelkopf (38) und andererseits mit der Federvorrichtung gelenkig verbunden ist, und daß die Federvorrichtung (41) etwa parallel zum hinteren, ansteigenden Teil (34) des Rahmens (31) zwischen dem Tretlagergehäuse (36) und der Schwinge (37) angeordnet ist.

3. Fahrrad nach Anspruch 1, dadurch gekennzeichnet, daß an Stelle der von der Sattelstütze zum die Hinterradnabe tragenden Teil der unteren Hinterradgabel vorgesehenen Streben zwei Federvorrichtungen (23) eingesetzt sind.

4. Fahrrad nach Anspruch 1, dadurch gekennzeichnet, daß das tiefergelegte Oberrohr (13) etwa parallel zum vorderen ansteigenden Rahmenteil angeordnet ist, und in der Nähe seines unteren Endes das Schwinggelenk (15) trägt, an dem die den Sattel (8) mit Sattelstütze (9) tragende Schwinge (16) gelenkig gelagert ist, und daß nur die oberen beiden Holme der Hinterradgabel (6) mit Federvorrichtungen (23) versehen sind.

5. Fahrrad nach Anspruch 4, dadurch gekennzeichnet, daß die Federvorrichtungen (23) wesentlicher Bestandteil der Hinterradgabel (6) selbst sind.

6. Fahrrad nach Anspruch 1, dadurch gekennzeichnet, daß das Oberrohr (13) mindestens in seinem rückwärtigen Teil gabelförmig als Führung (14) ausgebildet ist, und daß die Federvorrichtung (17) von der Gabel umschlossen ist und diese seitlich führt.

7. Fahrrad nach Anspruch 6, dadurch gekennzeichnet, daß die Federvorrichtungen Bestandteil der Hinterradgabel (6) selbst sind.

8. Fahrrad nach Anspruch 6, dadurch gekennzeichnet, daß in der Schwinge (16; 37) eine weitere Federvorrichtung (50; 52) eingebaut ist.

9. Fahrrad nach Anspruch 1, dadurch gekennzeichnet, daß die Querstrebe (13) mindestens in ihrem rückwärtigen Teil als Gabel (14) ausgebildet ist, und daß die Federvorrichtung (17) von der Gabel umschlossen ist.

10. Fahrrad nach Anspruch 9, dadurch gekennzeichnet, daß die Federvorrichtung (17) in der Gabel in einer Führung gleitend gelagert ist.

11. Fahrrad nach einem der Ansprüche 1 bis 10, dadurch gekennzeichnet, daß der Lenker (7) durch mindestens eine Federvorrichtung (21, 22, 23) abgefedert ist.

12. Fahrrad nach Anspruch 11, dadurch gekennzeichnet, daß für einen geschwungenen Lenker (7) dieser im Lenkervorbau (20) um eine waagerechte Achse drehbar gelagert ist, und daß rechts und links je eine Druckfeder (21) vorgesehen ist, die den Lenker federnd gegen den Vor - bau abstützt.

13. Fahrrad nach Anspruch 11, dadurch gekennzeichnet, daß für einen geraden Lenker an dem Gabelkopf eine Teleskopfedervorrichtung (22) vorgesehen ist.

14. Fahrrad nach Anspruch 1 und 2, dadurch gekennzeichnet, daß an der Schwinge (37) zwei Stützrohre (45) zur Aufnahme von Sattelstützen (47) angebracht sind, an denen der Sattel (48) befestigt ist.

15. Fahrrad nach Anspruch 1 und 2, dadurch gekennzeichnet, daß an der Hinterradgabel (42) eine Führungsschiene (44) angebracht ist, die der Führung der U-förmigen Schwinge (37) bei ihrer Schwingbewegung dient.

16. Fahrrad nach Anspruch 1 und 2, dadurch gekennzeichnet, daß oberhalb des Tretlagergehäuses (36) zwei Lagerböcke (43) zur Lagerung der Federvorrichtung (41) angeordnet sind.

17. Fahrrad nach Anspruch 1 und 2, dadurch gekennzeichnet, daß die Schwinge (37) im Bereich der Stützrohre (45) mit einer Verstärkung (49) mit U-förmigem Querschnitt versehen ist, und daß die Stützrohre außerhalb der Verstärkung angeordnet und mit dieser und der Schwinge fest verbunden sind.

18. Fahrrad nach Anspruch 1, dadurch gekennzeichnet, daß zwischen der oberen Querstrebe (35) und der Schwinge (37) eine weitere Federvorrichtung (50) angeordnet ist.

19. Fahrrad nach Anspruch 18, dadurch gekennzeichnet, daß die Federvorrichtung eine vorgespannte Blattfeder ist.

20. Fahrrad nach einem der Ansprüche 1 bis 19, dadurch gekennzeichnet, daß die Vorspannung der Federvorrichtungen einstellbar (51) ist.

**Claims**

1. Bicycle with a suspension device which resiliently supports the saddle (8; 48), with a lateral guide and with a swinging arm (16; 37) which is arranged above a top crossbar, which supports the saddle with saddle support bar and which is mounted on the frame by means of a first articulation point (15; 38, 39), and with a spring attached between the saddle and frame, whereby the suspension device (17; 41) is hinged to the saddle support bar carrying the saddle via a second articulation point, characterized by the fact that the swinging arm (16; 37) is hinged to the front section of the frame which is inclined upwards, that the spring is connected to the bottom bracket ball bearing housing or to the lower rear fork via a third articulation point, and characterized by the fact that the suspension device (17; 41) is supported so that it is able to slide by the lateral guide (14; 44) which is rigidly connected to the top crossbar.

2. Bicycle in accordance with claim 1, characterized by the fact that the top crossbar (35) is inclined downwards from front to rear, that the swinging arm (37) has a U-shaped cross-section whose side cheeks broaden from front to rear corresponding to the inclination of the top crossbar (35) and cover these, that the side cheeks have lugs (39, 40) at the front and rear with bearing bushes to accommodate articulated spindles, that the swinging arm (37) is thus hinged to the handlebar bracket (38) at one side and to the suspension device at the other side, and characterized by the fact that the suspension device (41) is arranged approximately parallel to the rear part (34) of the frame (31) which is inclined upwards, between the bottom bracket ball bearing housing (36) and the swinging arm (37).

3. Bicycle in accordance with claim 1, characterized by the fact that two suspension devices (23) are fitted in place of the struts otherwise fitted between the saddle support bar and the section of the lower rear fork which carries the rear wheel hub.

4. Bicycle in accordance with claim 1, characterized by the fact that the top crossbar (13) which is positioned lower is arranged approximately parallel to the front frame section which is inclined upwards and which bears the rocker pivot (15) in the vicinity of its bottom end, the swinging arm (16) which bears the saddle (8) with saddle support bar (9) being hinged to this pivot, and characterized by the fact that only the two upper spars of the rear fork (6) are provided with suspension devices (23).

5. Bicycle in accordance with claim 4, characterized by the fact that the suspension devices (23) are an essential part of the rear fork (6) itself.

6. Bicycle in accordance with claim 1, characterized by the fact that the top crossbar (13) is designed forked as a guide (14) at least in its rear section, and characterized by the fact that the suspension device (17) is enclosed by the fork and guides it laterally.

7. Bicycle in accordance with claim 6, characterized by the fact that the suspension devices are a part of the rear fork (6) itself.

8. Bicycle in accordance with claim 6, characterized by the fact that a further suspension device (50; 52) is incorporated in the swinging arm (16; 37).

9. Bicycle in accordance with claim 1, characterized by the fact that the cross bar (13) is designed as a fork (14) at least in its rear section, and characterized by the fact that the suspension device (17) is enclosed by the fork.

10. Bicycle in accordance with claim 9, characterized by the fact that the suspension device (17) is mounted so that it is able to slide in the fork in a guide.

11. Bicycle in accordance with one of the claims 1 to 10, characterized by the fact that the handlebar (7) is cushioned by at least one suspension device (21, 22, 23).

12. Bicycle in accordance with claim 11, characterized by the fact that, in the case of a curved handlebar (7), this handlebar is mounted so that it is able to swivel about a horizontal axis in the handlebar front end (20), and characterized by the fact that two compression springs (21), one at the right and one at the left, are fitted in order to resiliently support the handlebar with respect to the front end.

13. Bicycle in accordance with claim 11, characterized by the fact that, in the case of a straight handlebar, a telescopic spring suspension device (22) is provided on the handlebar bracket.

14. Bicycle in accordance with claims 1 and 2, characterized by the fact that two tubular supports (45) are attached to the swinging arm (37) for accommodating saddle support bars (47) to which the saddle (48) is secured.

15. Bicycle in accordance with claims 1 and 2, characterized by the fact that a guide rail (44), which serves to guide the U-shaped swinging arm (37) when it oscillates, is attached to the rear fork (42).

16. Bicycle in accordance with claims 1 and 2, characterized by the fact that two bearing blocks (43) for bearing the suspension device (41) are arranged above the bottom bracket ball bearing housing (36).

17. Bicycle in accordance with claims 1 and 2, characterized by the fact that the swinging arm (37) is provided with a reinforcement (49) with U-shaped cross-section in the area of the tubular supports (45), and characterized by the fact that the tubular supports are arranged outside the reinforcing section and are permanently connected to this and to the swinging arm.

18. Bicycle in accordance with claim 1, characterized by the fact that a further suspension device (50) is arranged between the top cross bar (35) and the swinging arm (37).

19. Bicycle in accordance with claim 18, characterized by the fact that the suspension device is a pretensioned leaf spring.

20. Bicycle in accordance with one of the claims 1 to 19, characterized by the fact that the pretension of the suspension devices is adjustable (51).

**Revendications**

1. Bicyclette équipée d'un système de suspension en dessous de la selle (8; 48), d'un guidage latéral et d'un bras oscillant (16; 37) rattaché au cadre par un premier joint articulé (15; 38; 39), portant la selle avec le tube porte-selle et disposé au-dessus d'un tube supérieur, de même que d'un ressort monté entre la selle et le cadre, le système de suspension (17; 41) étant relié par un deuxième joint articulé au tube porte-selle, caractérisée par le fait que le bras oscillant (16; 37) est articulé sur la partie montante avant du cadre, que le ressort est relié au carter du pédalier ou à la fourche de roue arrière du bas par une troisième articulation et que le système de suspension (17; 41) glisse grâce au guidage latéral (14; 44) qui est fixé au tube supérieur.

2. Bicyclette conforme à la spécification 1, caractérisée par le fait que le tube supérieur (35) est incliné d'avant en arrière, que le bras oscillant (37) a une section en U, que ses côtés s'élargissent d'avant en arrière selon l'inclinaison du tube supérieur (35) et le cachent, que les côtés sont munis de brides (39, 40) avec coussinets à l'avant et à l'arrière pour recevoir les axes articulés, que, de ce fait, le bras oscillant (37) est articulé d'une part sur la tête de fourche (38) et d'autre part sur le système de suspension, et que le système de suspension (41) est installé à peu près parallèlement à la partie montante arrière (34) du cadre (31) entre le carter de pédalier (36) et le bras oscillant (37).

3. Bicyclette conforme à la spécification 1, caractérisée par le fait que les entretoises prévues entre le tube porte-selle et la partie de la fourche inférieure de roue arrière portant le moyeu de roue arrière ont été remplacées par deux systèmes de suspension (23).

4. Bicyclette conforme à la spécification 1, caractérisée par le fait que le tube supérieur (13) descendu est à peu près parallèle à la partie montante avant du cadre et comporte à proximité de son extrémité du bas le joint articulé (15) sur lequel s'articule le bras oscillant (16) portant la selle (8) avec le tube porte-selle (9) et par le fait que seules les deux branches du haut de la fourche de roue arrière (6) sont dotées de systèmes de suspension.

5. Bicyclette conforme à la spécification 1, caractérisée par le fait que les systèmes de suspension (23) constituent une partie intégrante essentielle de la fourche de roue arrière (6).

6. Bicyclette conforme à la spécification 1, caractérisée par le fait que le tube supérieur (13) est conçu sous forme de fourche pour servir de guidage (14), au moins dans sa partie arrière, et que le système de suspension (17) est entouré par la fourche et la guide latéralement.

7. Bicyclette conforme à la spécification 6, caractérisée par le fait que les systèmes de suspension font partie intégrante de la fourche de roue arrière elle-même (6).

8. Bicyclette conforme à la spécification 6, caractérisée par le fait qu'un autre système de suspension (50; 52) est installé dans le bras oscillant (16; 37).

9. Bicyclette conforme à la spécification 1, caractérisée par le fait que le tube transversal (13) doit avoir la forme d'une fourche (14) au moins dans sa partie arrière et que le système de suspension (17) est entouré par la fourche.

10. Bicyclette conforme à la spécification 9, caractérisée par le fait que le système de suspension (17) glisse dans une glissière logée dans la fourche.

11. Bicyclette conforme à l'une des spécifications 1 à 10, caractérisée par le fait que le guidon (7) est amorti par un système de suspension (21, 22, 23) au moins.

12. Bicyclette conforme à la spécification 11, caractérisée par le fait que le guidon courbe (7) tourne autour d'un axe horizontal dans le cintre et qu'un ressort (21) est respectivement prévu à droite et à gauche et que ces ressorts relient en souplesse le guidon au cintre.

13. Bicyclette conforme à la spécification 11, caractérisée par le fait qu'un système de suspension télescopique (22) est prévu sur la tête de fourche pour un guidon droit.

14. Bicyclette conforme aux spécifications 1 et 2, caractérisée par le fait que deux tubes de selle (45) sont montés sur le bras oscillant (37) pour recevoir des tubes porte-selle (47) auxquels est fixée la selle (48).

15. Bicyclette conforme aux spécifications 1 et 2, caractérisée par le fait qu'une glissière (44) est prévue sur la fourche de roue arrière (42), laquelle sert au guidage du bras oscillant (37) en U lors de son mouvement oscillant.

16. Bicyclette conforme aux spécifications 1 et 2, caractérisée par le fait que deux paliers (43) servant à la fixation du système de suspension (41) sont disposés au-dessus du carter de pédalier (36).

17. Bicyclette conforme aux spécifications 1 et 2, caractérisée par le fait que le bras oscillant (37) est doté d'un renfort (49) à section en U dans la zone des tubes de selle (45) et que les tubes de selle sont disposés à l'extérieur du renfort et fixés à celui-ci et au bras oscillant.

18. Bicyclette conforme à la spécification 1, caractérisée par le fait qu'un autre système de suspension (50) est disposé entre la barre transversale du haut (35) et le bras oscillant (37).

19. Bicyclette conforme à la spécification 18, caractérisée par le fait que le système de suspension consiste en un ressort à lames prétendu.

20. Bicyclette conforme à l'une des spécifications 1 à 19, caractérisée par le fait que la prétension des systèmes de suspension est réglable (51).

0 108 327

Fig. 1

Fig. 2

0 108 327

Fig.3

Fig. 4

0 108 327

Fig. 5

45 51 50 37 38 44 32 35 34 42 41 33

0 108 327